# EUROPÄISCHE PATENTSCHRIFT

(11) **EP 0 601 332 B1**
(45) Veröffentlichungstag und Bekanntmachung des Hinweises auf die Patenterteilung: **13.09.1995**
(21) Anmeldenummer: 93117846.1
(22) Anmeldetag: 04.11.1993
(51) Int. Cl.: B23B 31/30

(54) **Spannvorrichtung für ein Spannwerkzeug**
Clamping device for a clamping tool
Dispositif de serrage pour un outil de serrage

(30) Priorität: 05.12.1992 DE 4240959
(43) Veröffentlichungstag der Anmeldung: 15.06.1994
(73) Patentinhaber: SMW Schneider & Weisshaupt GmbH, 88074 Meckenbeuren (DE)
(72) Erfinder: Hiestand, Karl, D-88630 Pfullendorf (DE)
(74) Vertreter: Engelhardt, Guido, Dipl.-Ing.

(56) Entgegenhaltungen:
- EP-A- 0 200 796
- EP-A- 0 496 967
- DE-A- 3 146 719
- DE-C- 3 306 571
- DE-C- 3 938 099
- US-A- 4 080 716

## Beschreibung

Die Erfindung bezieht sich auf eine hydraulisch betätigte Spannvorrichtung für eine an einer rotierend antreibbaren Spindel, insbesondere einer Werkzeugmaschine, angebrachte Spanneinrichtung, mit einem mit der Spindel drehfest verbundenen Zylinder und einem in diesen eingesetzten ein- oder beidseitig von Druckmittel beaufschlagbaren Spannkolben, einem zweiteiligen Drehverteiler, der ein festes Bauteil sowie ein drehbar gelagertes Bauteil aufweist, welches zur Zuführung des Druckmittels in die Druckräume des Zylinders über Druckmittelzuführungskanäle an diese wechselweise anschließbar ist, sowie einem mit dem Spannkolben verbundenen und mit Endschaltern oder dgl. zusammenwirkenden Schaltring.

Durch die DE-C2-33 06 571 ist eine Spannvorrichtung dieser Art in Form eines hydraulisch betätigten Spannzylinders bekannt, der drehfest mit einer rotierenden Spindel einer Werkzeugmaschine verbunden ist. Der Zylinder ist hierbei auf der der Spindel abgewandten Stirnseite mit einem im Querschnitt ringförmigen geschlossenen Ansatzstück versehen, auf dem der Drehverteiler gelagert ist und in das die an die Druckräume des Zylinders angeschlossenen Druckmittelkanäle eingearbeitet sind. Die Kolbenstange des Spannkolbens ist durch das Ansatzstück des Zylinders hindurchgeführt und an deren Ende ist der Schaltring angeordnet, der mit einem Endschalter zusammenwirkt. Dieser ist in eine im Anschluß an den Drehverteiler auf dem Ansatzstück des Zylinders des weiteren abgestützten Abschlußhaube eingesetzt.

Abgesehen davon, daß diese bekannte Spannvorrichtung eine große axiale Baulänge aufweist und deren Einsatzbereich dadurch begrenzt ist, ist der Drehverteiler unmittelbar neben dem Spannzylinder angebracht und auf dem an diesem angeformten Ansatzstück, das somit das rotierende Bauteil des Drehverteilers bildet, angeordnet. Die bei den Relativbewegungen zwischen dem ortsfesten und dem rotierenden Bauteil des Drehverteilers unumgänglich anfallende Wärmemenge wird somit zwangsläufig von dem Ansatzstück in den Zylinder abgeleitet, so daß dieser in einem unverhältnismäßig hohen Maße aufgeheizt wird. Um diese Wärmebelastung zu reduzieren, sind zwar an dem Ansatzstück unmittelbar neben dem Zylinder mehrere Gebläseflügel angebracht, um auf diese Weise eine Luftzirkulation zu erzeugen, ausreichend ist die dadurch hervorgerufene Wärmeabführung jedoch nicht. Durch die dem Zylinder zugeführte Wärmeenergie treten somit in diesem und auch in der Lagerung der Maschinenspindel in einem unzulässigen Maße Wärmedehnungen auf, so daß infolge davon Ungenauigkeiten bei der Bearbeitung von Werkstücken unvermeidbar sind.

Zur Drehsicherung des Spannkolbens sind bei dieser Ausgestaltung in diesen mehrere Führungsbolzen eingesetzt, die in in die Stirnwände des Zylinders eingearbeitete Bohrungen verschiebbar abgestützt sind. Die Stirnwände sind demnach in axialer Richtung unverhältnismäßig stark bemessen, auch sind durch die den Spannkolben durchgreifenden in Ausnehmungen eingesetzten Bolzen zusätzliche Leckstellen geschaffen. Dies kann in einem erheblichen Maße zu einem Druckausgleich zwischen den beiden Druckräumen des Zylinders und somit zu einem Druckabfall führen, eine sichere Einspannung eines Werkstückes ist dann mitunter nicht mehr gewährleistet.

Ferner ist bei dieser Spannvorrichtung von Nachteil, daß der durch die Haube abgedeckte Schaltring sowie der Endschalter in einem Naßraum angeordnet und nicht sichtbar sind. Ein optisches Erfassen der jeweiligen Betriebsstellung des mit dem Spannkolben verbundenen Spannwerkzeuges ist demnach nicht möglich, auch ist die Einstellung des Schaltringes und/oder des Endschalters unter erschwerten Bedingungen vorzunehmen. Insbesondere bedingt durch an dem Schaltring oder dem Endschalter haftendes Kühlmittel und/oder anderen Verunreinigungen, wie z. B. Drehspänen, sind demnach Fehlmeldungen unumgänglich. Und da Endschalter in einem hohen Maße auf Temperaturschwankungen reagieren, in der Abdeckhaube aber ein Wärmestau unumgänglich ist und der Endschalter durch das Kühlmittel von Zeit zu Zeit abgeschreckt wird, sind auch dadurch bedingte Fehlschaltungen nahezu unvermeidbar. Die bekannte Spannvorrichtung ist demnach mit zahlreichen Nachteilen behaftet, so daß Betriebsstörungen unvermeidbar und deren Einsatzbereich begrenzt sind.

Aufgabe der Erfindung ist es daher, eine Spannvorrichtung der eingangs genannten Gattung zu schaffen, die nicht nur kurz baut und somit eine geringe axiale Baulänge aufweist, sondern bei der zuverlässig ausgeschlossen ist, daß durch Verunreinigungen bedingte Fehlschaltungen ausgelöst werden können. Der Schaltring und mit diesem zusammenwirkende Bauteile sollen vielmehr gut sichtbar und leicht einstellbar außerhalb der Abdeckhaube angeordnet und keinen größeren Temperaturschwankungen ausgesetzt sein. Vor allem aber soll erreicht werden, daß die in dem Drehverteiler anfallende Wärmemenge in einer äußerst zufriedenstellenden Weise abzuführen ist, ohne daß durch diese im Zylinder und/oder anderen Bauteilen unerwünschte Wärmedehnungen hervorgerufen werden. Auch soll der Spannkolben in allen Betriebsstellungen drehfest an dem Zylinder abgestützt sein, zusätzliche Verdrehsicherungen in Form von in den Spannkolben eingesetzte und in Ausnehmungen des Zylinders eingreifende Bolzen sollen dazu nicht erforderlich sein. Der Bauaufwand, mit dem dies zu erreichen ist, soll gering gehalten werden, dennoch soll stets eine äußerst zuverlässige Betriebsweise gegeben sein.

Gemäß der Erfindung wird dies bei einer Spannvorrichtung für ein Spannwerkzeug gemäß der vorgenannten Art dadurch erreicht, daß der Zylinder auf der der Spindel abgekehrten Stirnseite mit zwei oder mehreren achsparallel gerichteten Ansatzstücken versehen ist, in denen die Druckmittelzuführungskanäle eingearbeitet sind, daß mit dem Spannkolben ein zwischen dem Zylinder und dem Drehverteiler angeordneter Träger formschlüssig verbunden ist, der Ausnehmungen zur Durchführung der Ansatzstücke des Zylinders aufweist, und daß der Schaltring auf der Außenmantelfläche oder auf einer der Stirnseiten des Trägers an diesem angebracht ist.

Vorteilhaft ist es hierbei, den Träger des Schaltringes als von der Kolbenstange des Spannkolbens radial abstehenden im Querschnitt vorzugsweise winkelförmig ausgestalteten Ring auszubilden, der über angeformte, in in die Kolbenstange des Spannkolbens eingearbeitete Ausnehmungen eingreifende Klauen, ein in Ausnehmungen eingelegtes Keilstück, eine Stirnverzahnung oder dgl. drehfest und lösbar mit der Kolbenstange zu verbinden ist.

Der Träger kann hierbei zwischen einem mit der Kolbenstange des Spannkolbens verbundenen, vorzugsweise anschraubbaren Schutzrohr oder dgl. und der Kolbenstange eingespannt sein, nach einer andersartigen Ausgestaltung ist es aber auch möglich, den Träger drehfest an der Kolbenstange des Spannkolbens anzuschrauben.

Die Ansatzstücke des Zylinders sind zweckmäßigerweise in Form von Ringsegmenten auszubilden, und die zu deren Aufnahme in dem Träger vorgesehenen Ausnehmungen sollten in ihrer Querschnittsform der jeweiligen Querschnittsform der Ansatzstücke angepaßt sein. Auch sollte das umlaufende Bauteil des Drehverteilers unmittelbar an den Ansatzstücken des Zylinders befestigt, beispielsweise angeschraubt,sein.

Angebracht ist es ferner, den Schaltring lösbar auf dem Träger, z. B. mittels an diesem anschraubbarer Spannklauen oder eines mit diesem verbindbaren Spannringes, aufzuspannen, wobei zur lösbaren Verbindung des Schaltringes mit dem Träger der Spannring mit zwei oder mehreren sich in Umfangsrichtung erstreckenden Freisparungen und der Schaltring mit diesen zugeordneten sich in Umfangsrichtung erstreckenden kürzer als die Freisparung bemessenen Ansätzen versehen sein sollte, die nach einer Verdrehung des Schaltringes axial durch die Freisparungen des Spannringes hindurchführbar sind.

Nach einer andersartigen Ausgestaltung ist es aber auch möglich, den Träger und den Schaltring einstückig, z. B. durch Anformen des Schaltringes an dem Träger, zu gestalten.

Anstelle der Endschalter kann auch ein Linear-Meßgeber vorgesehen werden, der mit einem in den Träger eingesetzten Permanentmagneten als Schaltring zusammenwirkt.

Die mit dem Schaltring zusammenwirkenden Endschalter bzw. der Linear-Meßgeber können in einfacher Weise z. B. mit Hilfe eines den Schaltring übergreifenden als Winkelstück oder dgl. ausgebildeten Halter an dem ortsfesten Bauteil des Drehverteilers angebracht sein, wobei das Winkelstück mittels eines z. B. in Form eines Stiftes ausgebildeten Anschlages in Achsrichtung des Drehverteilers lageorientiert an dessen ortsfestem Bauteil abgestützt sein sollte.

Wird eine Spannvorrichtung für ein Spannwerkzeug gemäß der Erfindung ausgebildet, in dem der Zylinder mit mehreren axial abstehenden Ansatzstücken versehen wird, an denen das rotierende Bauteil des Drehverteilers befestigt ist und die einen mit der Kolbenstange des Spannkolbens verbundenen Träger für den Schaltring durchgreifen, so ist nicht nur eine sehr kompakte Bauweise gegeben, sondern es wird auch zuverlässig verhindert, daß durch die im Drehverteiler auftretende Erwärmung der Zylinder aufgeheizt wird. Außerdem ist der Spannkolben über den Träger drehfest an den Ansatzstücken des Zylinders abgestützt und der Schaltring ist optisch sichtbar zwischen dem Drehverteiler und dem Zylinder angeordnet, Verunreinigungen durch Kühlmittel, Drehspäne und dgl. können demnach nicht an diesen gelangen, so daß dadurch bedingte Fehlschaltungen nahezu ausgeschlossen sind.

Die in dem Drehverteiler anfallende Wärmemenge wird zwar von dessen rotierendem Bauteil in die an dem Zylinder angeformten Ansatzstücke abgeleitet werden, da diese aber mit hoher Drehzahl in der Atmosphäre umlaufen, werden diese ständig gekühlt. Die aufgenommene Wärmeenergie wird somit an die umgebende Luft abgegeben. Auch von dem ständig mitumlaufenden an den Ansatzstücken anliegenden Träger wird Wärme aufgenommen und ebenfalls an die Umgebungsluft abgeführt. Der Stirnwand des Zylinders wird somit nur eine geringe vernachlässigbare Wärmemenge zugeführt, ein Aufheizen des Zylinders ist, da die Ansatzstücke ständig von der Umgebungsluft umspült werden und gewissermaßen als Ventilator wirken, dadurch ausgeschlossen. Durch Wärmedehnungen bedingte fehlerhafte Einspannungen der zu bearbeitenden Werkstücke werden auf diese Weise zuverlässig vermieden.

Des weiteren ist von Vorteil, daß der Schaltring im äußeren Bereich der Spannvorrichtung an einer gut sichtbaren Stelle zwischen dem Zylinder und dem Drehverteiler angeordnet ist. Die Einstellung der mit diesem zusammenwirkenden Bauteile kann somit ohne Schwierigkeiten vorgenommen werden, auch kann jederzeit optisch eine Kontrolle des Spannwerkzeuges erfolgen, da dessen Verstellglieder zwangläufigmit dem Spannkolben verbunden sind und dessen jeweilige Betriebsstellung wiederum der Lage des Schaltringes entspricht. Die Handhabung der vorschlagsgemäß ausgebildeten Spannvorrichtung wird dadurch sehr erleichtert, vor allem aber ist durch diese Anordnung des Schaltringes und der mit diesem zusammenwirkenden Bauteile ausgeschlossen, daß durch Verunreinigungen und Temperaturschwankungen bedingte Fehlschaltungen ausgelöst werden. Kühlmittel und/oder Drehspäne können nicht, da auch bei einem Hohlspannzylinder die Werkstückdurchführung geschlossen ausgebildet werden kann, an den im äußeren Bereich der Spannvorrichtung angeordneten Schaltring gelangen, auch sind die Temperaturveränderungen der Umgebungsluft gering; durch äußere Einflüsse bedingte Betriebsstörungen sind demnach weitgehend vermieden. Und da ohne besonderen Bauaufwand der Spannkolben mit Hilfe der Ansatzstücke stets drehfest an dem Zylinder abgestützt ist, sind auch keine in diesen eingreifende Führungsbolzen erforderlich, ein Druckausgleich zwischen den beiden Druckräumen des Zylinders tritt demnach ebenfalls nicht ohne weiteres ein. Bei einfacher konstruktiver Ausgestaltung und dem dadurch gegebenen geringen Fertigungsaufwand ermöglicht die erfindungsgemäß ausgebildete Spannvorrichtung für ein Spannwerkzeug demnach eine hohe Betriebssicherheit über einen längeren Zeitraum und gewährleistet eine zuverlässige Betriebsweise der mit dieser bestückten Werkzeugmaschine.

In der Zeichnung ist ein Ausführungsbeispiel einer gemäß der Erfindung ausgbildeten Spannvorrichtung für ein Spannwerkzeug dargestellt, die nachfolgend im einzelnen erläutert ist. Hierbei zeigen:
- Figur 1: eine an einer Werkzeugmaschine angebaute Spannvorrichtung, in einem Axialschnitt,
- Figur 2: einen Schnitt nach der Linie II - II der Figur 1,
- Figur 3 und 4: andersartige Ausgestaltungen des bei der Spannvorrichtung nach Figur 1 vorgesehenen Trägers und des Schaltringes,
- Figur 5: einen Schnitt nach der Linie V - V der Figur 4 und
- Figur 6: die mit einem Linear-Meßgeber versehene Spannvorrichtung nach Figur 1, teilweise im Schnitt und in Ansicht.

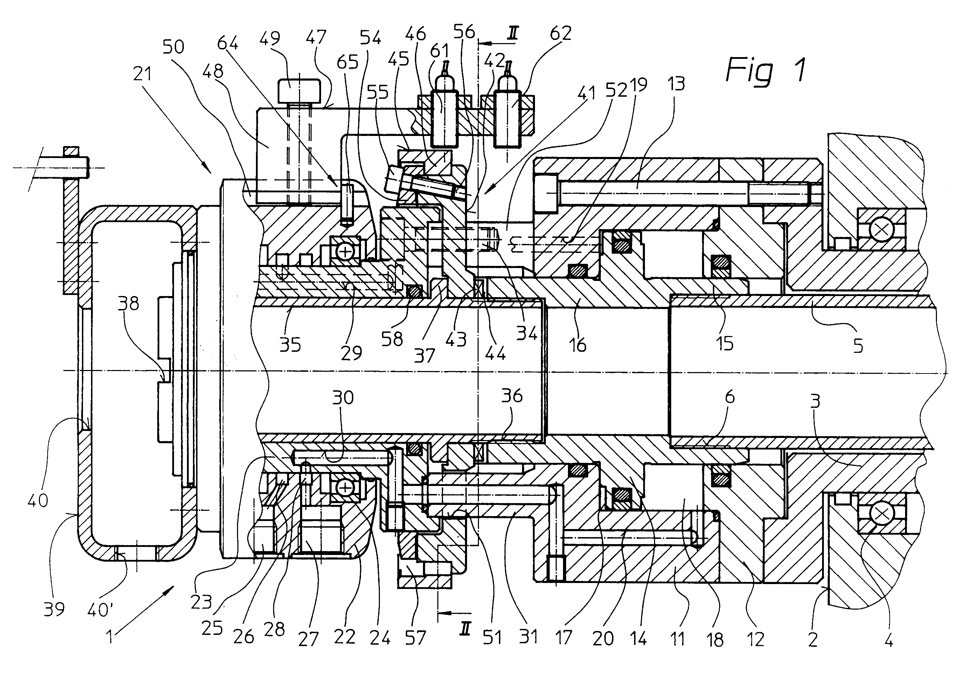

Die in den Figuren 1, 3, 4 und 6 dargestellte und mit 1 bzw. 1' bzw. 1'' bezeichnete Spannvorrichtung ist an einer rotierend antreibbaren Spindel 3 einer Werkzeugmaschine 2 angebracht und besteht im wesentlichen aus einem mit einem Spannkolben 14 bzw. 14' versehenen Zylinder 11 und einem zweiteiligen Drehverteiler 21, mittels dem Druckmittel wechselweise den Druckräumen 17 oder 18 des Zylinders 11 zuführbar ist. Die Spindel 3 ist hierbei mittels eines Wälzlagers 4 drehbar in der nur teilweise wiedergegebenen Werkzeugmaschine 2 gelagert, deren Spindel 3 eine ebenfalls nicht dargestellte Spanneinrichtung, beispielsweise in Form eines Spannfutters, trägt. Über ein Zugrohr 5, das mit einem angearbeiteten Gewinde 6 versehen und in eine in Richtung der Werkzeugmaschine 2 abstehende Kolbenstange 15 des Spannkolbens 14 eingeschraubt ist, ist dieser zwangläufig mit den Verstellgliedern der Spanneinrichtung verbunden. Durch eine axiale Verschiebung des in dem durch einen Deckel 12 verschlossenen und mit Hilfe von Spannschrauben 13 an der Maschinenspindel 3 befestigten Zylinder 11 eingesetzten Spannkolbens 14 können somit die Verstellglieder der Spanneinrichtung betätigt werden.

Der Drehverteiler 21 weist ein ortsfest angeordnetes Bauteil 22 sowie ein rotierendes Bauteil 23 auf, das drehfest mit dem Zylinder 11 verbunden ist. Über Wälzlager 24 sind die beiden relativ zueinander verdrehbaren Bauteile 22 und 23 aufeinander gelagert, und in das ortsfeste Bauteil 22 sind zwei Anschlüsse 25 und 27 eingearbeitet, die an Ringkanäle 26 bzw. 28 angeschlossen sind. Mit den Ringkanälen 26 und 28 kommunizieren wiederum in das rotierende Bauteil 23 eingearbeitete Druckmittelkanäle 29 bzw. 30, die zu den Druckräumen 17 bzw. 18 des Zylinders 11 führen.

Zur drehfesten Verbindung des rotierenden Bauteils 23 des Drehverteilers 21 mit dem Zylinder 11 sind an diesem auf der der Werkzeugmaschine 2 abgewandten Seite drei Ansatzstücke 31, 32 und 33 angeformt, an denen das Bauteil 23 mittels Schrauben 34 befestigt ist. Außerdem sind in die Ansatzstücke 31 und 32 die Druckmittelkanäle 20 und 19 eingearbeitet, die mit den Druckmittelkanälen 29 bzw. 30 des Bauteils 23 verbunden sind. Von den Anschlüssen 25 bzw. 27 kann demnach über die Ringkammern 26 bzw. 28 sowie die Druckmittelkanäle 29 bzw. 30 sowie 19 bzw. 20 Druckmittel in die Druckräume 17 bzw. 18 des Zylinders 11 einströmen, so daß dadurch eine Axialverschiebung des Spannkolbens 14 nach rechts bzw. links zu bewerkstelligen ist.

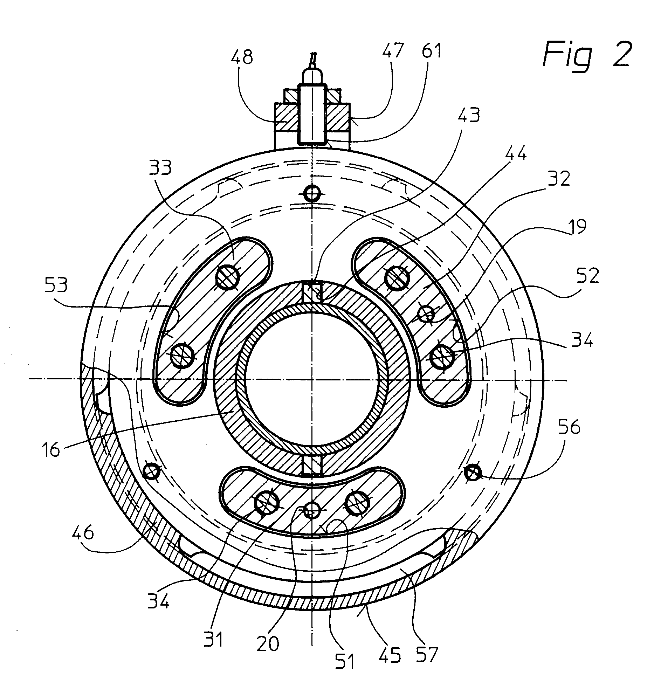

Bei der Ausgestaltung nach den Figuren 1 und 2 ist in eine in Richtung des Drehverteilers 21 abstehenden Kolbenstange 16 des Spannkolbens 14 ein Schutzrohr 35 mittels eines an diesem angearbeiteten Gewindes 36 angeschraubt. Das Schutzrohr 35, an dem eine in das Bauteil 23 eingesetzte Dichtung 58 anliegt, ist dazu an seinem freien Ende des weiteren mit einer Schlüsselöffnung 38 versehen. Außerdem ist an dem ortsfesten Bauteil 22 des Drehverteilers 21 eine Auffang und Schutzhaube 39 befestigt, die mit einem Durchgang 40 für stangenförmige Werkstücke sowie einen Anschluß 40' für eine Ablaufleitung versehen ist. Zu bearbeitende stangenförmige Werkstücke können somit durch die Spannvorrichtung 1 hindurchgesteckt werden.

An der Kolbenstange 16 des Spannkolbens 14 ist des weiteren ein Träger 41 drehfest angebracht, der als Ring 42 ausgebildet ist und einen abnehmbaren Schaltring 45 trägt. In den Träger 41 sind drei Ausnehmungen 51, 52 und 53 eingearbeitet, die in ihrer Querschnittsform den in Form von Ringsegmenten gestalteten Ansatzstücken 31, 32 und 33 entsprechen und von diesen durchgriffen werden. Der Spannkolben 14 ist demnach über den Träger 41, da dieser von den Ansatzstücken 31, 32 und 33 mitgenommen wird, stets drehfest an dem Zylinder 11 abgestützt.

Zur drehfesten aber lösbaren Verbindung des Trägers 41 mit der Kolbenstange 16 des Spannkolbens 14 sind bei der Ausgestaltung nach den Figuren 1 und 2 zwei Klauen 43 vorgesehen, die in in die Kolbenstange 16 eingearbeitete Ausnehmungen 44 eingreifen. Mit Hilfe des Schutzrohres 35, das dazu mit einem radial abstehenden Ansatz 37 versehen ist, ist der Träger 41 zwischen diesem und der Kolbenstange 16 eingespannt.

Bei der Ausgestaltung nach den Figuren 1 und 2 ist der Schaltring 45 lösbar auf dem winkelförmig gestalteten Träger 41 angeordnet. Um dies zu bewerkstelligen, ist mittels Schrauben 55, die in in den Träger 41 eingearbeitete Gewindebohrungen 56 eingreifen, an diesem ein Spannring 54 befestigt, der mit in Umfangsrichtung sich erstreckenden Freisparungen 57 aufweist. Und der Schaltring 45 ist mit radial gerichteten Ansätzen 46 versehen, die in Spannstellung auf dem Träger 41 aufliegen und in Umfangsrichtung kürzer bemessen sind als die Freisparungen 57, so daß bei gelösten Schrauben 55 der Schaltring 45 entsprechend verdreht und durch eine Axialverschiebung von dem Träger 41 abgenommen werden kann.

Dem Schaltring 45 zugeordnet sind hierbei zwei Endschalter 61 und 62, die in einen als Winkelstück 48 ausgebildeten Halter 47 eingesetzt sind. Mittels einer Spannschraube 49 ist der in einer in das ortsfest angeordnete Bauteil 22 des Drehverteilers 21 eingearbeitete Nut 50 eingesetzte Halter 47 arretierbar. Mit Hilfe eines als Stift 65 gestalteten Anschlages 64 ist eine lageorientierte Einstellung des Halters 47 und somit der Endschalter 61 und 62 ohne Schwierigkeiten zu bewerkstelligen.

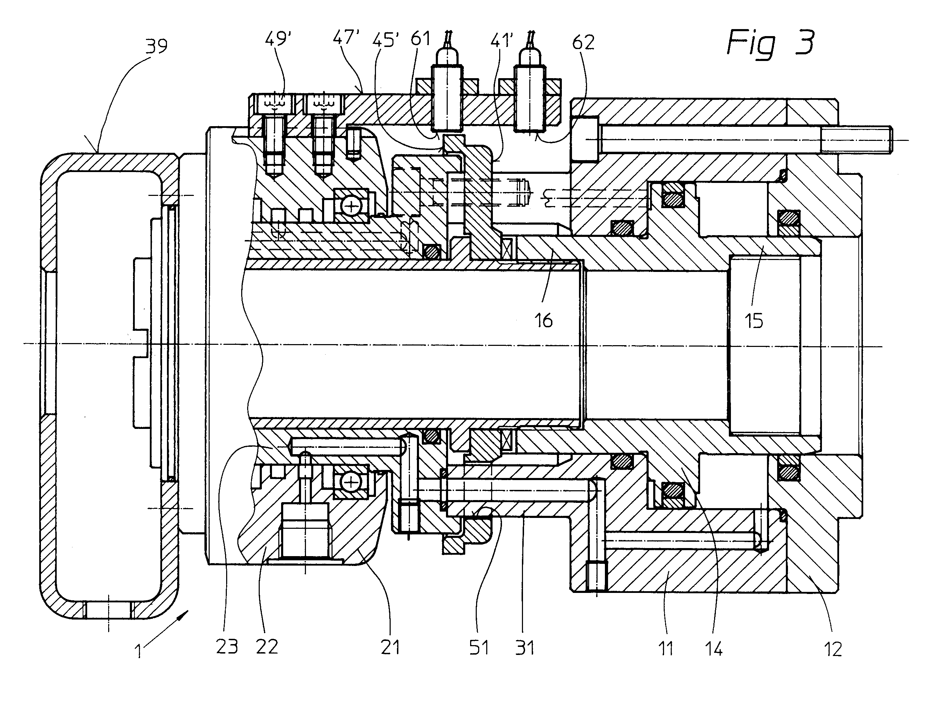

Bei der Ausgestaltung nach Figur 3 ist der Schaltring 45' unmittelbar an dem Träger 41' angeformt, so daß diese aus einem Stück bestehen. Des weiteren ist hierbei der Halter 47' als Platte ausgebildet, die mittels zweier Schrauben 49' an dem Bauteil 22 des Drehverteilers 21 befestigt ist.

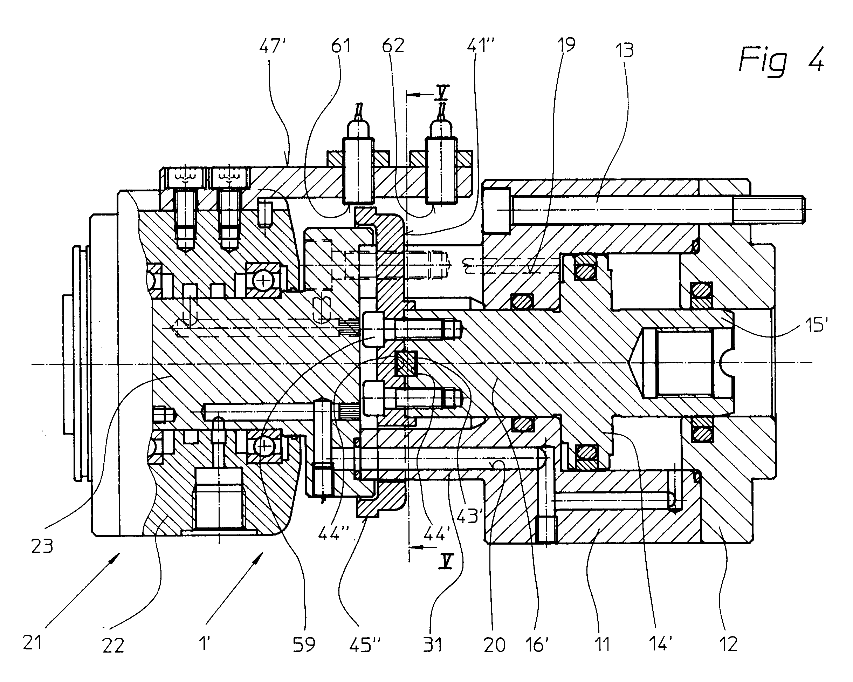

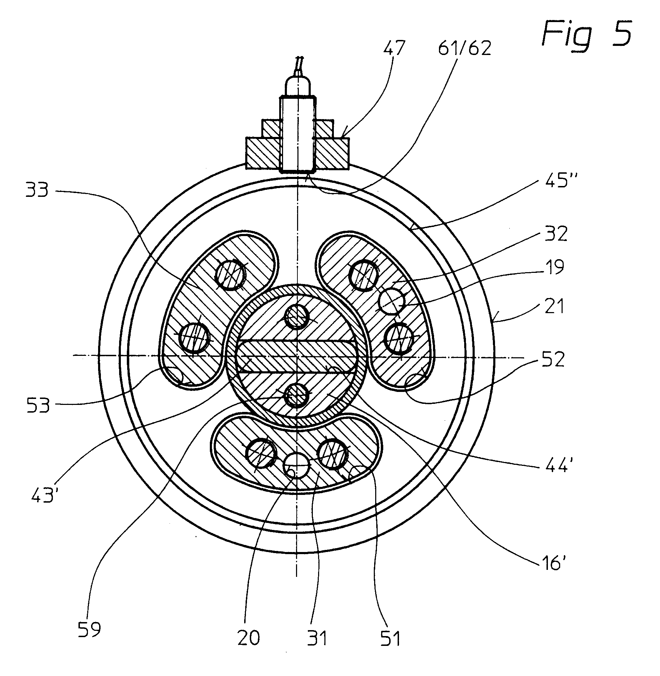

Gemäß den Figuren 4 und 5 ist bei der Spannvorrichtung 1' der Träger 41'', an dem der Schaltring 45'' ebenfalls angeformt ist, mittels eines Keilstückes 43' und Schrauben 59 drehfest an der Kolbenstange 16' des Spannkolbens 14' befestigt. Dazu sind in die Kolbenstangen 16' sowie den Träger 41'' einander gegenüberliegend angeordnete Ausnehmungen 44' bzw. 44'' eingearbeitet, in die das Keilstück 43' eingelegt ist. Die Kolbenstange 15' ist wiederum über eine nicht dargestellte Zugstange mit den Verstellgliedern der Spanneinrichtung zwangläufig verbunden.

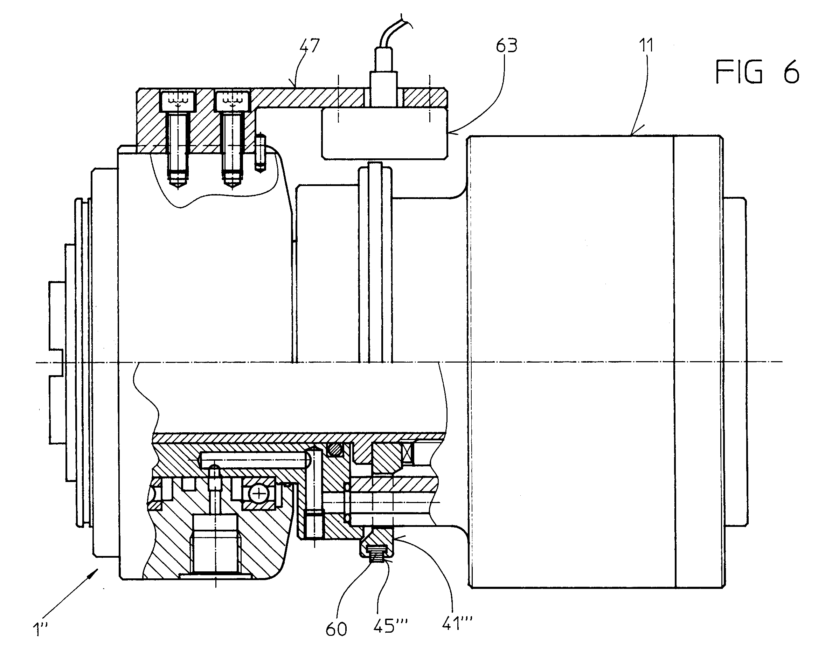

Anstelle von Endschaltern ist bei der Spannvorrichtung 1'' nach Figur 6 ein Linear-Meßgeber 63 vorgesehen, der an dem Halter 47 angebracht ist. Der Träger 41''' ist in diesem Fall mit einem Permanentmagneten 60 als Schaltring 45''' bestückt, so daß die jeweilige Lage des Spannkolbens 14 erkennbar ist und ausgewertet werden kann.

An den an dem Zylinder 11 vorgesehenen Ansätzen 31, 32 und 33 ist nicht nur das rotierende Bauteil 23 des Drehverteilers 21 befestigt, sondern an diesen ist auch der Träger 41 und somit der Spannkolben 14 drehfest abgestützt. Des weiteren wird durch die in der Umgebungsluft umlaufenden und demnach in einem hohen Maße von dieser auf allen Seiten umspülten Ansätzen 31, 32 und 33 die in dem Drehverteiler 21 anfallende Wärmemenge weitgehend abgeführt, Wärmedehnungen des Zylinders 11 sind dadurch vermieden.

## Patentansprüche

1. Hydraulisch betätigte Spannvorrichtung (1) für eine an einer rotierend antreibbaren Spindel (3), insbesondere einer Werkzeugmaschine (2), angebrachte Spanneinrichtung, mit einem mit der Spindel (3) drehfest verbundenen Zylinder (1)) und einem in diesen eingesetzten ein- oder beidseitig von Druckmittel beaufschlagbaren Spannkolben (14), einem zweiteiligen Drehverteiler (21), der ein festes Bauteil (22) sowie ein drehbar gelagertes Bauteil (23) aufweist, welches zur Zuführung des Druckmittels in die Druckräume (17, 18) des Zylinders (11) über Druckmittelzuführungskanäle (19, 20: 29, 30) an diese wechselweise anschließbar ist, sowie einem mit dem Spannkolben (14) verbundenen und mit Endschaltern (61, 62) zusammenwirkenden Schaltring (45),
**dadurch gekennzeichnet,**
daß der Zylinder (11) auf der der Spindel (3) abgekehrten Stirnseite mit zwei oder mehreren achsparallel gerichteten Ansatzstücken (31, 32, 33) versehen ist, in denen die Druckmittelzuführungskanäle (19, 20) eingearbeitet sind, daß mit dem Spannkolben (14) ein zwischen dem Zylinder (11) und dem Drehverteiler (21) angeordneter Träger (41) formschlüssig verbunden ist, der Ausnehmungen (51, 52, 53) zur Durchführung der Ansatzstücke (31, 32, 33) des Zylinders (11) aufweist, und daß der Schaltring (45) auf der Außenmantelfläche oder auf einer der Stirnseiten des Trägers (41) an diesem angebracht ist.

2. Spannvorrichtung nach Anspruch 1,
**dadurch gekennzeichnet,**
daß der Träger (41) des Schaltringes (45) als von der Kolbenstange (16) des Spannkolbens (14) radial abstehender im Querschnitt vorzugsweise winkelförmig gestalteter Ring (42) ausgebildet ist.

3. Spannvorrichtung nach Anspruch 1 oder 2,
**dadurch gekennzeichnet,**
daß der Träger (41) über an diesem angeformte, in in die Kolbenstange (16, 16') des Spannkolbens (14, 14') eingearbeitete Ausnehmungen (44) eingreifende Klauen (43), ein in Ausnehmungen (44', 44'') eingelegtes Keilstück (43'), eine Stirnverzahnung oder dgl. drehfest und lösbar mit der Kolbenstange (16, 16') verbunden ist.

4. Spannvorrichtung nach Anspruch 3,
**dadurch gekennzeichnet,**
daß der Träger (41) zwischen einem mit der Kolbenstange (16) des Spannkolbens (11) verbundenen, vorzugsweise anschraubbaren Schutzrohr (35) oder dgl. und der Kolbenstange (16) eingespannt ist.

5. Spannvorrichtung nach Anspruch 3,
**dadurch gekennzeichnet,**
daß der Träger (41'') an der Kolbenstange (16') des Spannkolbens (14') angeschraubt ist.

6. Spannvorrichtung nach einem oder mehreren der Ansprüche 1 bis 5,
**dadurch gekennzeichnet,**
daß die Ansatzstücke (31, 32, 33) des Zylinders (11) in Form von Ringsegmenten ausgebildet sind.

7. Spannvorrichtung nach einem oder mehreren der Ansprüche 1 bis 6,
**dadurch gekennzeichnet,**
daß die in dem Träger (41) vorgesehenen Ausnehmungen zur Aufnahme der Ansatzstücke (31, 32, 33) in ihrer Querschnittsform der jeweiligen Querschnittsform der Ansatzstücke (31, 32, 33) angepaßt sind.

8. Spannvorrichtung nach einem oder mehreren der Ansprüche 1 bis 7,
**dadurch gekennzeichnet,**
daß das umlaufende Bauteil (23) des Drehverteilers (21) unmittelbar an den Ansatzstücken (31, 32, 33) des Zylinders (11) befestigt, beispielsweise angeschraubt, ist.

9. Spannvorrichtung nach einem oder mehreren der Ansprüche 1 bis 8,
**dadurch gekennzeichnet,**
daß der Schaltring (45) lösbar auf dem Träger (41), z. B. mittels an diesem anschraubbarer Spannklauen oder eines mit diesem verbindbaren Spannringes (54), aufgespannt ist.

10. Spannvorrichtung nach Anspruch 9,
**dadurch gekennzeichnet,**
daß zur lösbaren Verbindung des Schaltringes (45) mit dem Träger (41) der Spannring (54) mit zwei oder mehreren sich in Umfangsrichtung erstreckenden Freisparungen (57) und der Schaltring (45) mit diesen zugeordneten sich in Umfangsrichtung erstreckenden kürzer als die Freisparung (57) bemessenen Ansätzen (46) versehen sind, die nach einer Verdrehung des Schaltringes (45) axial durch die Freisparungen (57) des Spannringes (54) hindurchführbar sind.

11. Spannvorrichtung nach einem oder mehreren der Ansprüche 1 bis 8,
**dadurch gekennzeichnet,**
daß der Träger (41') und der Schaltring (45') einstückig, z. B. durch Anformen des Schaltringes (45') an dem Träger (41'), ausgebildet sind.

12. Spannvorrichtung nach einem oder mehreren der Ansprüche 1 bis 11,
**dadurch gekennzeichnet,**
daß als Endschalter ein Linear-Meßgeber (63) vorgesehen ist, der mit einem in den Träger (41''') eingesetzten Permanentmagneten (60) als Schaltring (45''') zusammenwirkt.

13. Spannvorrichtung nach einem oder mehreren der Ansprüche 1 bis 12,
**dadurch gekennzeichnet,**
daß die mit dem Schaltring (45, 45') zusammenwirkenden Endschalter (61, 62) bzw. der Linear-Meßgeber (63) z. B. mit Hilfe eines den Schaltring (45) übergreifenden als Winkelstück (48) oder dgl. ausgebildeten Halters (47) an dem ortsfesten Bauteil (22) des Drehverteilers (21) abgestützt sind.

14. Spannvorrichtung nach Anspruch 13,
**dadurch gekennzeichnet,**
daß das Winkelstück (48) mittels eines z. B. in Form eines Stiftes (65) ausgebildeten Anschlages (64) in Achsrichtung des Drehverteilers (21) lageorientiert an dessen ortsfestem Bauteil (22) abgestützt ist.

## Claims

1. Hydraulically actuated clamping device (1) for a clamping facility which is attached to a rotating driven spindle (3), in particular a spindle (3) of a machine tool (2), with a cylinder (11) in a rigid connection with the spindle (3) and a clamping piston (14) inserted into the cylinder (11) such that either one or both sides of the clamping piston (14) can be acted upon by the pressurized medium, whereby the clamping device (1) also has a two-part rotary distributor (21) consisting of a fixed component (22) and a component (23) in a rotating mounting, which can be alternately connected to pressure chambers (17,18) of the cylinder (11) by means of pressurized medium supply ducts (19,20 : 29,30) in order to supply the pressurized medium into the aforementioned pressure chambers (17,18) and the clamping device (1) additionally has a switching ring (45) connected to the clamping piston (14) which acts in conjunction with limit switches (61,62),
**characterized in that,**
the cylinder (11) has two or more extension pieces (31,32,33) in a parallel axial arrangement located on the opposite end to the spindle (3) and the pressurized medium supply ducts (19,20) are machined into the aforementioned extension pieces (31,32,33), that the clamping piston (14) is positively connected to a carrier piece (41) positioned between the cylinder (11) and the rotary distributor (21), whereby the aforementioned carrier piece (41) has slots (51, 52,53) for the passage of the extension pieces (31,32,33) on the cylinder (11), and that the switching ring (45) is attached to the external casing surface or to one of the end surfaces of the carrier piece (41).

2. Clamping device in accordance with Claim 1,
**characterized in that,**
the carrier piece (41) of the switching ring (45) is configured as a ring (42) projecting radially from the piston rod (16) of the clamping piston (14), whereby in a preferred embodiment, the aforementioned ring (42) has an angled cross-section.

3. Clamping device in accordance with Claim 1 or 2,
**characterized in that,**
the carrier piece (41) is connected to the piston rod (16,16') by means of dogs (43) formed on the carrier piece (41) which engage in slots (44) machined into the piston rod (16,16') of the clamping piston (14,14'), a wedge piece (43') inserted into slots (44',44''), a spur gear profile or similar means, whereby the aforementioned connection is rigid and can be released.

4. Clamping device in accordance with Claim 3,
**characterized in that,**
the carrier piece (41) is clamped between the piston rod (16) and a protective tube (35) or similar object which is connected to the piston rod (16) of the clamping piston (11) and, in a preferred embodiment, can be screwed on.

5. Clamping device in accordance with Claim 3,
**characterized in that,**
the carrier piece (41'') is screwed onto the piston rod (16') of the clamping piston (14').

6. Clamping device in accordance with one or more of Claims 1 to 5,
**characterized in that,**
the extension pieces (31,32,33) on the cylinder (11) are shaped like segments of a ring.

7. Clamping device in accordance with one or more of Claims 1 to 6,
**characterized in that,**
the cross-sectional shape of the slots provided in the carrier piece (41) for accommodating the extension pieces (31,32,33) is such as to be adapted to the specific cross-sectional shape of the extension pieces (31,32,33).

8. Clamping device in accordance with one or more of Claims 1 to 7,
**characterized in that,**
the rotating component (23) of the rotary distributor (21) is directly attached to, for example screwed onto, the extension pieces (31,32,33) of the cylinder (11).

9. Clamping device in accordance with one or more of Claims 1 to 8,
**characterized in that,**
the switching ring (45) is clamped onto the carrier piece (41) in a releasable connection, for example by means of clamping dogs screwed onto the carrier piece (41) or of a clamping ring (54) which can be connected to the carrier piece (41).

10. Clamping device in accordance with Claim 9,
**characterized in that,**
in order to provide a releasable connection between the switching ring (45) and the carrier (41), the clamping ring (54) has two or more notches (57) extending around its circumference and the switching ring (45) has extensions (46) allocated to, and of a smaller size than, the notches (57), whereby the aforementioned extensions (46) can be axially inserted through the notches (57) in the clamping ring (54) after the switching ring (45) is turned.

11. Clamping device in accordance with one or more of Claims 1 to 8,
**characterized in that,**
the carrier piece (41') and the switching ring (45') are produced as a single piece, for example by forming the switching ring (45') onto the carrier piece (41').

12. Clamping device in accordance with one or more of Claims 1 to 11,
**characterized in that,**
a linear measurement encoder (63) is provided as the limit switch, and operates in conjunction with a permanent magnet (60) inserted into the carrier piece (41''') as a switching ring (45''').

13. Clamping device in accordance with one or more of Claims 1 to 12,
**characterized in that,**
the limit switches (61,62) which operate in conjunction with the switching ring (45,45') or the linear measurement encoder (63) are supported against the fixed component (22) of the rotary distributor (21), for example by means of a holding piece (47) which extends past the switching ring (45) and has the shape of an L-shaped piece (48) or similar.

14. Clamping device in accordance with Claim 13,
**characterized in that,**
the L-shaped piece (48) is supported against the fixed component (22) of the rotary distributor (21) and positioned in the direction of the axis of the rotary distributor (21) by means of a stop (64), for example in the form of a pin (65).

## Revendications

1. Dispositif de serrage hydraulique (1) pour un outil de serrage disposé sur une broche (3) entraînée en rotation, notamment une machine-outil (2), avec un cylindre (11) forcé à suivre le rotation de la broche (3) et un piston de serrage (14) prévu dans celui-ci et soumis de part et d'autre à l'action d'un fluide sous pression, un distributeur rotatif divisé (21) comprenant un organe fixe (22) ainsi qu'un organe rotatif (23), qui, pour le refoulement du fluide sous pression vers les chambres de pression (17, 18) du cylindre (11) au moyen de canalisations d'alimentation en fluide sous pression (19, 20; 29, 30), se laisse brancher alternativement sur lesdits canalisations, ainsi qu'un anneau de commande (45) lié au piston de serrage (14) et collaborant avec des contacteurs de fin de course (61, 62),
caractérisé en ce que
le cylindre (11) comporte, sur la face frontale éloignée de la broche (3), deux ou plusieurs embouts (31, 32, 33) orientés parallèlement à l'axe, dans lesquels sont pratiqués les canalisations d'alimentation en fluide sous pression (19, 20), en ce qu'il soit lié au piston de serrage (14) un support (41) disposé entre le cylindre (11) et le distributeur rotatif (21) et comportant des évidements (51, 52, 53) pour le passage des embouts (31, 32, 33) du cylindre (11) et en ce que l'anneau de commande (45) soit fixé sur le support (41), où il est disposé sur l'enveloppe extérieure ou sur une des faces frontales.

2. Dispositif de serrage d'après la revendication 1,
caractérisé en ce que
le support (41) de l'anneau de commande (45) soit conçu sous forme d'un anneau (42) saillant radialement de la tige de piston (16) du piston de serrage (14) et dont la section ait de préférence une forme angulaire.

3. Dispositif de serrage d'après la revendication 1 ou 2,
caractérisé en ce que
par l'intermédiaire de griffes (43) formées sur le support (41) et s'engrenant dans des évidements (44) pratiqués dans la tige de piston (16, 16') du piston de serrage (14, 14'), d'un coin (43') inséré dans les évidements (44', 44''), d'une denture ou de moyens similaires, le support (41) soit lié à la tige de piston (16, 16') de façon à ce qu'il soit forcé à suivre la rotation mais qu'il se laisse détacher.

4. Dispositif de serrage d'après la revendication 3,
caractérisé en ce que
le support (41) soit serré entre un tube de protection (35) ou un dispositif semblable, lié, de préférence par vissage, à la tige de piston (16) du piston de serrage (11), et à la tige de piston (16).

5. Dispositif de serrage d'après la revendication 3,
caractérisé en ce que
le support (41'') soit vissé à la tige de piston (16') du piston de serrage (14').

6. Dispositif de serrage d'après une ou plusieurs des revendications 1 à 5,
caractérisé en ce que
les embouts (31, 32, 33) du cylindre (11) soient conçus sous forme de segments angulaires.

7. Dispositif de serrage d'après une ou plusieurs des revendications 1 à 6,
caractérisé en ce que
la section des évidements prévus dans le support (41) pour le logement des embouts (31, 32, 33) soit adaptée à la section respective des embouts (31, 32, 33).

8. Dispositif de serrage d'après une ou plusieurs des revendications 1 à 7,
caractérisé en ce que
l'organe rotatif (23) du distributeur rotatif (21) soit fixé directement sur les embouts (31, 32, 33) du cylindre (11), par exemple par vissage.

9. Dispositif de serrage d'après une ou plusieurs des revendications 1 à 8,
caractérisé en ce que
l'anneau de commande (45) soit monté de manière détachable sur le support (41), p. ex. au moyen de griffes de serrage qui y sont vissées, ou d'un anneau de serrage (54) qui s'y laisse raccorder.

10. Dispositif de serrage d'après la revendication 9,
caractérisé en ce que,
pour la liaison détachable de l'anneau de commande (45) avec le support (41), l'anneau de serrage (54) soit muni de deux ou de plusieurs évidements (57) s'étendant en direction du pourtour, et que l'anneau de commande (45) soit équipé d'embouts (46) assignés à ceux-ci, s'étendant en direction du pourtour et dimensionnés plus courts que les évidements (57) qui, après la rotation de l'anneau de commande (45) se laissent passer axialement à travers les évidements (57) de l'anneau de commande (45).

11. Dispositif de serrage d'après une ou plusieurs des revendications 1 à 8,
caractérisé en ce que
le support (41') et l'anneau de commande (45') soient conçus en une seule pièce, p. ex. en ce que l'anneau de commande (45') soit pratiqué sur le support (41').

12. Dispositif de serrage d'après une ou plusieurs des revendications 1 à 11,
caractérisé en ce
qu'il soit prévu en tant que contacteur de fin de course, un transmetteur de mesure linéaire (63) collaborant avec un aimant permanent (60) en tant qu'anneau de commande (45'''), inséré dans le support (41''').

13. Dispositif de serrage d'après une ou plusieurs des revendications 1 à 12,
caractérisé en ce que
les contacteurs de fin de course (61, 62) collaborant avec l'anneau de commande (45, 45') ou le transmetteur de mesure linéaire (63) s'appuient sur l'organe stationnaire (22) du distributeur rotatif (21), p. ex. au moyen d'un support (47) conçu en tant que pièce angulaire (48) ou en tant que pièce semblable, et s'étendant au-delà de l'anneau de commande (45).

14. Dispositif de serrage d'après la revendication 13,
caractérisé en ce que
la pièce angulaire (48) soit positionnée en direction axiale du distributeur rotatif (21) au moyen d'une butée (64) sous forme p. ex. d'un goujon (65) et qu'elle s'appuie sur son organe stationnaire (22).
